Europäisches Patentamt

(19) European Patent Office

Office européen des brevets

(11) Publication number: **0 014 752**
**B1**

## (12) EUROPEAN PATENT SPECIFICATION

(45) Date of publication of patent specification: **19.01.83**

(21) Application number: **79104896.0**

(22) Date of filing: **04.12.79**

(51) Int. Cl.³: **G 06 K 15/16,**
**G 03 G 15/00**

(54) Printer with and method for duplex printed sheet output.

(30) Priority: **29.12.78 US 974585**

(43) Date of publication of application:
**03.09.80 Bulletin 80/18**

(45) Publication of the grant of the patent:
**19.01.83 Bulletin 83/3**

(84) Designated Contracting States:
**DE FR GB IT NL SE**

(56) References cited:
**DE - A - 2 806 155**
**DE - A - 2 810 294**
**US - A - 3 784 190**

(73) Proprietor: **International Business Machines Corporation**
**Armonk, N.Y. 10504 (US)**

(72) Inventor: **Treseder, Robert Cassius**
**325 Los Altos Drive**
**Aptos, CA 95003 (US)**

(74) Representative: **Petersen, Richard Courtenay**
**IBM United Kingdom Patent Operations Hursley Park**
**Winchester Hants. SO21 2JN (GB)**

Courier Press, Leamington Spa, England

## Printer with and method for duplex printed sheet output.

The present invention relates to printers and more particularly to printers which provide duplex sheet output.

Printing is an important part of data processing systems for producing various reports and documents required for business. It is desirable that these reports or documents be printed on both sides of the page to produce a resultant saving in paper costs and a reduction in bulk of the individual report or document.

It has not been possible in the prior art to produce reports printed on both sides of the sheet (duplex printing) in a printer operating on-line with a data processing system. Recent advances in copier technology have made it easier and more economical to copy on both sides of the sheet. However, this represents a post-processing step for documents printed in a data processing system. One prime requirement for a duplex printed operating on-line with a data processing system is high throughput since the cost of processor time is relatively high and a printer which minimizes the processor time is to be desired. Known copier systems operating from printed originals are not suitable for incorporation into a printer. One such system duplexes only one sheet at a time which would be detrimental to printer throughput. A second system involves handling of printed sheets and/or originals from one position to another in the system which is detrimental to throughput and may also require operator attention.

In DE—A—2810294, there is disclosed a xerographic copier including means for printing an image on one side of a sheet, first sheet feeding means for moving sheets from an input in sequence along a first path to the printing means to receive an image on one side, second sheet feeding means for moving sheets in sequence along a second path from the printing means to an output, and selectively actuable third sheet feeding means for moving selected sheets in a third path from an intermediate point in the second path to a sheet stack holder and for moving sheets in sequence from a stack in the holder to an intermediate point in the first path, whence the sheets are movable in sequence by the first sheet feeding means to the printing means to receive a duplex image on the other side and by the second sheet feeding means to the output.

Thus the third path includes a sheet holder in which sheets printed on one side are stacked, whilst an original document is replaced to provide for duplex copying. The resultant interruption in the flow of sheets to the printing means renders the copier unsuitable for operation on-line with a data processing system, which needs a continuous spaced succession of sheets to be printed.

This invention seeks to provide a printer suitable for operation on-line with a data processing system which produces sets of duplex printed sheets.

According to the invention, a printer which includes means for printing an image on one side of a sheet, first sheet feeding means for moving sheets from an input in sequence along a first path to the printing means to receive an image on one side, second sheet feeding means for moving sheets in sequence along a second path from the printing means to an output, and selectively actuable third sheet feeding means for moving selected sheets in a third path from an intermediate point in the second path to an intermediate point in the first path, whence selected sheets are movable in sequence by the first sheet feeding means to the printing means to receive a duplex image on the other side and by the second sheet feeding means to the output, is characterised in that the third path and the first and second paths between the intermediate points therein are capable of containing several successive sheets simultaneously, in that the third sheet feeding means is actuable to move selected sheets in succession along the third path from the intermediate point in the second path to the intermediate point in the first path, and in that control means is operable, in response to a request for duplex printing on a set of sheets, to actuate the first sheet feeding means to feed sheets from the input in succession along the first path to the printing means to be printed on one side, to actuate the second sheet feeding means to feed sheets in succession from the printing means to the intermediate point therein, to actuate the third sheet feeding means to feed selected sheets in succession from the intermediate point in the second path to the intermediate point in the first path, to actuate the first sheet feeding means in response to the arrival of a sheet along the third path to cease feeding sheets from the input along the first path to the intermediate point therein and to feed sheets from the third path in succession along the first path from the intermediate point therein to the printing means to be printed on the other side, and to actuate the second sheet feeding means to feed sheets in succession from the printing means along the second path to the output.

The sheet feeding means may be operable to feed different sizes of sheet in response to a sheet size indication signal.

In this case, it is preferred that the sum of the length between the intermediate points in the first and second paths and the length of the third path is such as to contain an integral multiple of each of the sheet sizes.

The invention extends to a method of duplex printing, in which sheets, in a set which numbers no more than is containable in the third path and between the intermediate points in the first and second paths, are fed in succession along the first path to the printing means to be printed on one side, in succession along the second path to the intermediate point therein, in succession along the third path to the intermediate point in the first path, in succession along the first path from the intermediate point therein to the printing means to be printed on the other side, in succession and along the second path to the output.

In an embodiment of the invention hereinafter described, there is provided an electrophotographic printer capable of producing sets comprising sheets of documents printed on both sides. The apparatus comprises an input sheet feed path which is controllable to feed sheets to a gate member which registers the sheet in a predetermined position suitable for movement to the electrophotographic drum to receive the developed image of a printed page from the drum at the transfer station. The sheet is separated from the drum and transported to the fusing station to fix and permanently fuse the image to the sheet. The sheet is then transported toward a sheet sensor device which detects the presence of the sheet at a predetermined position where a decision is made to transport the sheet to a duplexing feed path for printing on the other side of the sheet or to transport the sheet to a sheet output device such as a stacker. The sheet is reversed in the duplexing feed path and the duplex feed means feeds the sheet back to an intermediate position in the input feed path so that the sheet can be registered and again moved to the electrophotographic drum to receive the developed image on the reverse side of the sheet. Control means are provided to produce signals to control the movement of the sheets through the printer in synchronism with the creation of the image to be printed on the sheet and to present these sheets in a predetermined sequence and orientation in the sheet output device.

The scope of the invention is defined by the appended claims; and how it can be carried into effect is hereinafter particularly described with reference to the accompanying drawings, in which:—

FIGURE 1 is a block diagram of the basic components comprising the printing apparatus;

FIGURE 2 is a diagrammatic simplified side view of the printing apparatus according to the invention;

FIGURE 3 is a cross-sectional view on the lines III—III of Fig. 2;

FIGURE 4 is a cross-sectional view on the lines IV—IV of Fig. 3;

FIGURE 5 is a side view of a belt roller sheet feed means;

FIGURE 6 is a sectional view on the line VI—VI of Fig. 5;

FIGURE 7 is a schematic block diagram of control means for the printing apparatus;

FIGURE 8 is a schematic block diagram of part of sheet tracking means; and

FIGURE 9 is a schematic block diagram of part of duplex path control circuit.

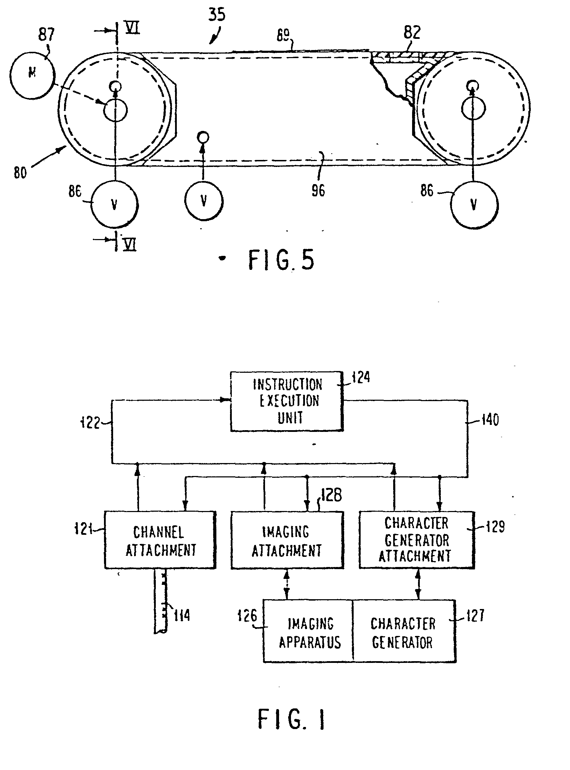

The sheet handling apparatus according to the invention is suitable for use with a printer operable on line with a data processing system to print data sent from the data processing system. Such a printer and part of its control is shown in Fig. 1, and comprises a data-in bus 122 coupled to a main channel 114 from a data processing system via a channel attachment 121 and providing appropriate interface between the main channel 114 and the printer. Data from the data processing system is communicated over the main channel 114 to the channel attachment 121 whence it is carried by the data-in bus 122 to an instruction execution unit 124. The data-in bus 122 also provides data to the instruction execution unit 124 from imaging apparatus 126 to which it is coupled via an imaging attachment 128, and from a character generator 127 to which it is coupled via a character generator attachment 129. Data at the output of the instruction execution unit 124 is carried by data-out bus 140 to the character generator attachment 129, the imaging attachment 128 and the channel attachment 121.

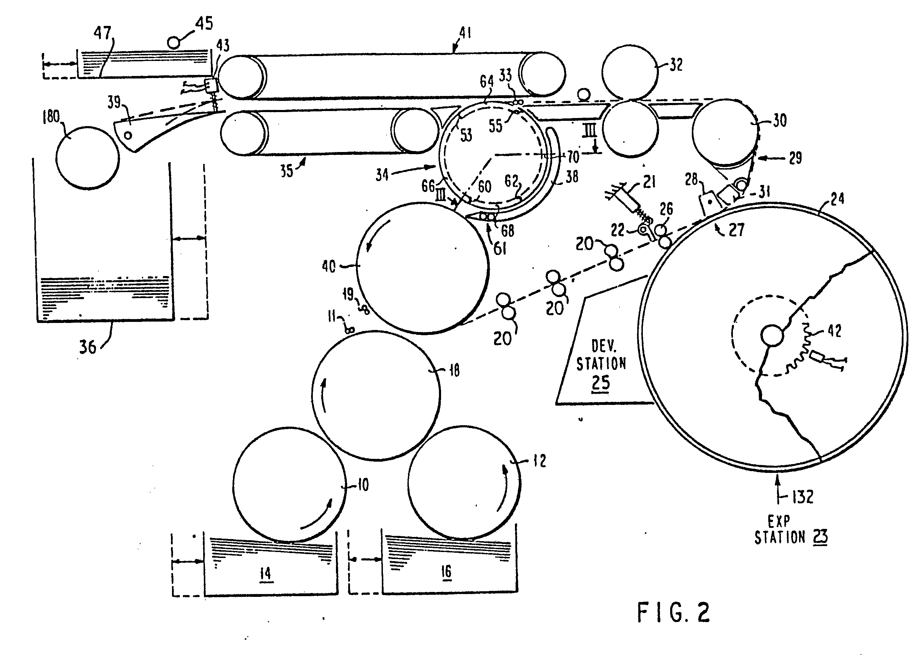

The imaging apparatus 126 modulates a laser beam 132 (Fig. 2) as the beam is scanned in the raster fashion over a character space to print each character. The beam is used to discharge selected areas on a rotating photoconductor drum at an exposure station 23. The imaging apparatus employs known electrophotographic techniques to develop the discharged areas on the surface of photoconductor drum 24 which results from the modulated laser beam 132. As the drum 24 rotates past a developer station 25, the surface is coated with a toner. The toner adheres to the discharged areas of the drum surface and is transferred to a print sheet which comes into contact with the drum 24 at a transfer station 27. The paper as so printed is advanced through a fuser station 32 where the image is fixed to the sheet.

Sheets for such printing are input along an input sheet feed path by one or other of two feed drums 10 and 12, operating upon separate sheet input stacks 14 and 16, respectively. Two input drums are used so that one feed can be used and the paper in the other input can be replenished without interrupting the continuous operation of the printer. The two feed drums 10 and 12 are selectively and alternately actuable to feed a sheet to a registered position on a selectively actuated paper drum 18. The paper drum 18 feeds a sheet to an input paper path including an array of continuously running feed rolls 20 of conventional design which feeds the sheet to a gate member 22 for registration at a position near the electrophotograph drum 24. The gate member 22 is actuable by a solenoid 21 to release the registered sheet and the sheet is fed by feed rolls 26 to the electrophotographic drum 24 in synchronism with the developed image on the drum so that the sheet and the image are properly overlaid in the transfer station 27 where the image is transferred by the action of corona in a corona discharge device 28 to the sheet. The sheet is separated from the surface of the drum with the aid of sheet removing apparatus 31, and is transported to the fuser station 32 by sheet feed 29 including drum 30. Thence the sheet approaches a position adjacent a duplex drum 34, where a decision is made to either feed the sheet to an output stacker 36 or to feed the sheet through a duplex feed path to print an image on the other side of the sheet. If duplexing is scheduled for the sheet, it is attracted to the duplex drum 34 and fed to a position adjacent sheet flipper means 38 where the sheet is moved away from the drum 34 and then attached to and fed by a staging drum 40 back to the input paper path for printing of the second side. Thus, the sheet is reversed by being flipped from drum 34 to drum 40 in the duplex feed path.

The paper feed is selectively controlled by vacuum and pressure forces in response to control signals generated in response to the input requirements for the particular sheet and an indication of sheet presence at a predetermined position and sheet position indicating signals. The electrophotographic process is continuous and synchronous. For this reason, a timing device synchronized with the electrophotographic process is used to control the paper motion because it is necessary for the sheet to arrive at a precise time at the transfer station so that the developed image on the photoconductor will appear at the desired location on the sheet when the image is transferred to the sheet. The timing device may be conventional and the emitter 42 comprise a circular member attached to the same shaft as the photoconductor drum and having a plurality of spaced teeth members on its peripheral surface. When one of the teeth members is aligned with a magnetic pickup member, a low reluctance path is established and an electrical pulse is produced in a pickup circuit. The pulses are produced at a rate determined by the allowable tolerance for print line placement on the sheet and other timing considerations and this rate may be 284 pulses per circumferential cm of movement of the electrophotographic drum 24, for example.

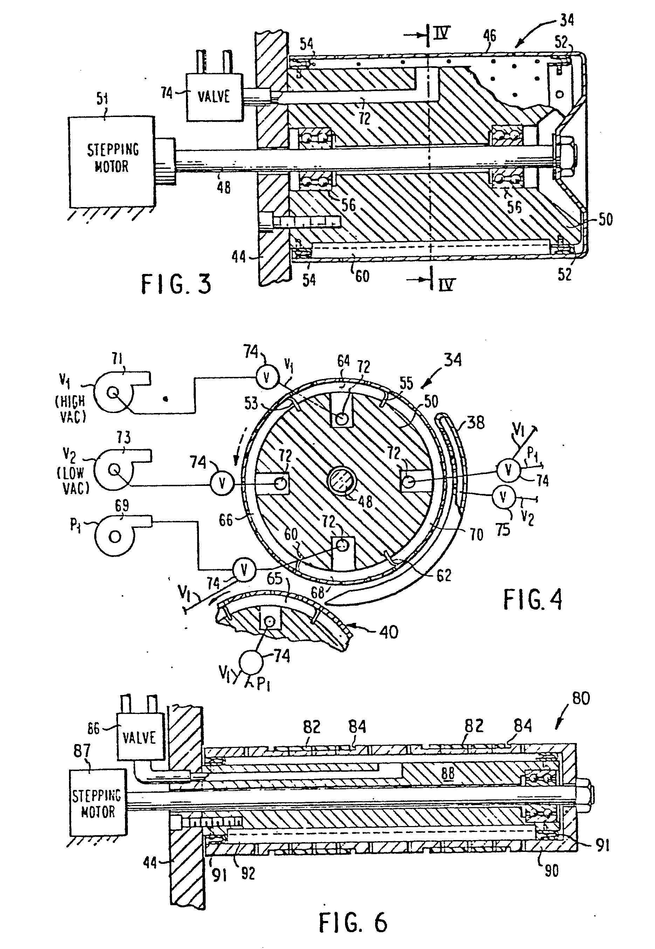

The drums 18, 34 and 40 are similar in design and selectively actuable to feed sheets in response to control signals by controlling vacuum forces in the drum. Only the drum 34 is illustrated in detail in Figures 3 and 4, and this structure is typical of the other paper control drums. The drum comprises a hollow cylindrical perforated outer member 46, having one end open and being cantilever mounted from the enclosed end on a shaft 48, which extends through a fixed frame support member 44 and a stationary cylindrical control member 50. The shaft 48 is mounted for rotation in bearings 56 within the member 50. The member 50 is positioned inside, and has a diameter slightly less than the hollow member 46, by a distance such as 2.54 mm, for example. Annular seal members 52 and 54 are placed adjacent the respective ends of the cylindrical member 46 to form a confined space between cylindrical member 46 and stationary control member 50.

The shaft 48 is selectively driven at a predetermined rotational speed, by a stepping motor 51, such as that described in U.S. Patent 3,463,980 (inventor T. R. Fredriksen). The confined space between cylindrical member 46 and stationary member 50 is divided into four sections 64, 66, 68 and 70 so that the pressure to each of these sections can be controlled individually. The division is provided by wiper members 53, 55, 60 and 62 which are fixed to control member 50 and extend into sealing relation with the inner surface of cylindrical member 46. The wiper members 53, 55, 60 and 62 extend axially along the member 50 between seals 52 and 54 to produce the plurality of substantially sealed sections 64, 66, 68 and 70 between members 46 and 50. One of four passages 72 through support member 44 and cylindrical member 50 lead to each of the sections. The pressure to each of the sections is controlled by a valve 74 coupled to the respective passage 72. Each valve 74 has inputs from two or more of a source 69 (Fig. 4) of relatively high pressure $P_1$, for example, 5066 pascals a source 71 of relatively high vacuum $V_1$, for example −5066 pascals, a source 73 of relatively low vacuum $V_2$, for example −1266 pascals, and atmosphere.

The outer cylindrical member 46 is perforated so that the pressure within each of the sections can be communicated to paper on the surface. The relatively high pressure $P_1$ from source 69 is such as to be capable of moving a sheet away from that section of the feed drum, the relatively high vacuum $V_1$ from source 71 is such as to be capable of attracting a sheet to that section of the feed drum, and the relatively low vacuum $V_2$ from the source 73 is such as to retain a sheet that has been previously attracted to that or another section of the feed drum.

The control valves 74 are preferably solenoid actuated poppet valves which can be actuated relatively quickly to control the vacuum or pressure to the relevant section 64, 66, 68 or 70 in the drum 34.

The section 64 may be supplied with high vacuum $V_1$ by its valve 74 or with atmospheric pressure and thus be capable of attracting or not attracting an approaching sheet. The drum 34 rotates counterclockwise (Fig. 5) so that a sheet attracted to the drum is carried around past the section 66 which may be supplied with low vacuum $V_2$ by its valve. The sections 68 and 70 may be supplied with high vacuum $V_1$ or pressure $P_1$ by their valves 74.

The drum 40 is similar to the drum 34 and in particular has a section 65 adjacent the section 68 of the drum 34 which may be supplied with high vacuum $V_1$ or pressure $P_1$ by its valve 74. The drum 40 also rotates counterclockwise (Figs. 2 and 5), so that the trailing edge of a sheet subjected to pressure $P_1$ in the sections 68 and 70 may be attracted by high vacuum $V_1$ in the adjacent section 65 of the drum 40 and become the leading edge of the sheet drawn onto, and carried around by, the drum 40.

The sheet flipper means 38 comprises a hollow part-cylindrical member of part-annular section. The member is spaced somewhat from the surface of the drum 40 with an inner perforated surface facing and overlapping major parts of the sections 68 and 70. The interior of the member may be supplied with low vacuum $V_2$ by a valve 75 similar to the valves 74. A sheet carried by the drum 34 and attracted to it by vacuum in sections 68 and 70 may be blown off the drum 34 by pressure applied to sections 68 and 70 and be retained against the flipper means by low vacuum until withdrawn by attraction of its previously trailing edge to the drum 40.

The drum 40 has other pressure controlled sections by which a sheet may be retained on the surface and then released to the sheet feed path including the feed rolls 20.

The drum 18 is similar to the drum 34 and has pressure controlled sections by which a sheet may be attracted from either the drum 10 or the drum 12, retained on the surface and then released to the sheet feed path including the feed rolls 20.

The sheet feed path, in addition to the sheet feed drums, has sheet feed means which are controllable by suitable pressure and vacuum forces. Only one of these sheet feed means 35 is shown in detail, Figs. 5 and 6 and comprises a belt roller assembly. A roller 80 is provided at each end of the assembly and comprises a fixed cylindrical member 88 (Fig. 6) surrounded by a hollow perforated closed ended cylindrical member 90. Cylindrical members 88 and 90 are separated by a small space, such as 2.54 mm, closed off by annular seals 91. Wiper members 92 similar to the wipers 53, 55, 60 and 62 divide the space into a plurality of compartments to which vacuum or pressure may be applied through a valve 86-similar to valves 74.

The member 90 is carried on a shaft passing through the member 88 and driven by a stepping motor 87. The surface of the member 90 has two grooves 84, in which ride two belts 82 which are perforated to match the perforations in the member 90 and whose surfaces extend at the same level as the surface of the member 90.

Between the rollers 80 (Fig. 5) extends a plenum chamber 96 to which vacuum may be applied and which has perforated grooved surfaces aligned with and leading to and from the surfaces of the rollers 80. The belts 82 ride in the perforated grooves.

A paper sheet 89 may be attracted to a roller 80 where a section has high vacuum applied to it, be carried round by the roller and belts 82, passed to and retained upon the plenum chamber 96 and finally detached from the belts 82 and the other roller 80 where a section has pressure applied to it. Thus the position of paper sheet attach and detach may be controlled. The openings in belts 82 and in the member 90 are aligned so that the vacuum is operative to hold the paper sheet 89 to the belts for transport thereby. Other sheet feed means are similar, such as auxiliary sheet feed 41 and post transfer sheet feed 29, though the latter has different sized rollers.

Output sheet feed 35 comprises a belt roller assembly which is actuated to feed a sheet from the sheet path from a position near the duplex drum 34 to an output sheet stacker 36. The sheet is fed along the upper surface of sheet deflector 39 when the deflector is in its normal position (shown in full line in Fig. 2) to stacker roller 180. Stacker roller 180 which is similar to drum 34, has its annular section space divided by wiper members set so that a sheet is attracted from about the top position to the bottom position so that the sheet is flipped over and stacked with its most recently printed side down. In some cases this does not provide the proper sheet orientation in stacker 36 and in those cases deflector 39 is moved in response to a signal to solenoid 43 to the position shown dotted in Fig. 1, so that the sheet is deflected below the roller 180 and stacked with the most recently printed side up.

An auxiliary sheet input sheet feed roller 45 is selectively actuable to feed a sheet from the top of an auxiliary sheet stack 47. The auxiliary sheet is fed to the auxiliary sheet feed 41 which comprises a belt roller assembly. The vacuum and belt drive are selectively actuable to feed sheets from the auxiliary input to the duplex decision point adjacent the drum 34. The auxiliary input may be used to feed special sheets, such as cover sheets for example, into the system. The auxiliary paper transport may also be used to take sheets out of sequence and re-introduce these sheets to the sheet flow at a later time. One example of such a usage of the auxiliary paper transport is in producing a three page (or other odd number of pages) report. The first sheet has page one printed thereon and the second sheet is printed with page three. The first sheets are directed through the duplex paper path and the second sheets are directed to the auxiliary paper transport. Page two is printed on the back of the first sheets and these sheets are then directed intermittently to the output stacker without flip over by the roller 180. The auxiliary paper feed is energized intermittently to move the second sheets to the output stacker around the roller 180 in synchronism with and between the first sheets.

At the transfer station 27, the corona discharge device 28 produces a charge on the back of a sheet to attract the image toner from the image forming surface of drum 24 to the sheet. Due to the transfer charge, an electrostatic bond is produced between the image forming surface and the sheet. For this reason, sheet removing apparatus 31 must be provided which is capable of separating the sheet bearing the unfused toner image from the image forming surface without damaging the unfused images which are loosely adhered to the sheet. A suitable sheet removing apparatus is that described in U.S. Patent Specification No. 3,784,190. This apparatus uses a nozzle assembly having a plurality of nozzles mounted near the electrophotographic surface. A high velocity flow of air is produced from the nozzles for a predetermined time to detach the leading edge of the sheet from the drum. A continuing flow of air maintains the sheet closely adjacent the nozzle assembly and permits movement of the sheet to the post transfer sheet feed 29.

Electrical control signals are generated in the machine from sensing means located throughout the processing stations and paper line, synchronized with the mechanical movement of the sheets through the machine, to enable control in accordance with the desired printing function. The printer may be operated as a stand alone unit and have built-in control circuits to cycle the machine through the desired steps to perform the desired printing and paper control function of the machine. The printer may also be operated on-line with a data processing system and receive the control signals from the data processing system if desired. In such systems operating on line with a data processing system, it is preferred to use a microprocessor within the printer to perform the control operations. One suitable microprocessor that can be used for the system is the instruction execution unit 24, which may be as shown and described in U.S. Patent Specification No. 4,031,519 (inventor Gerald I. Findey).

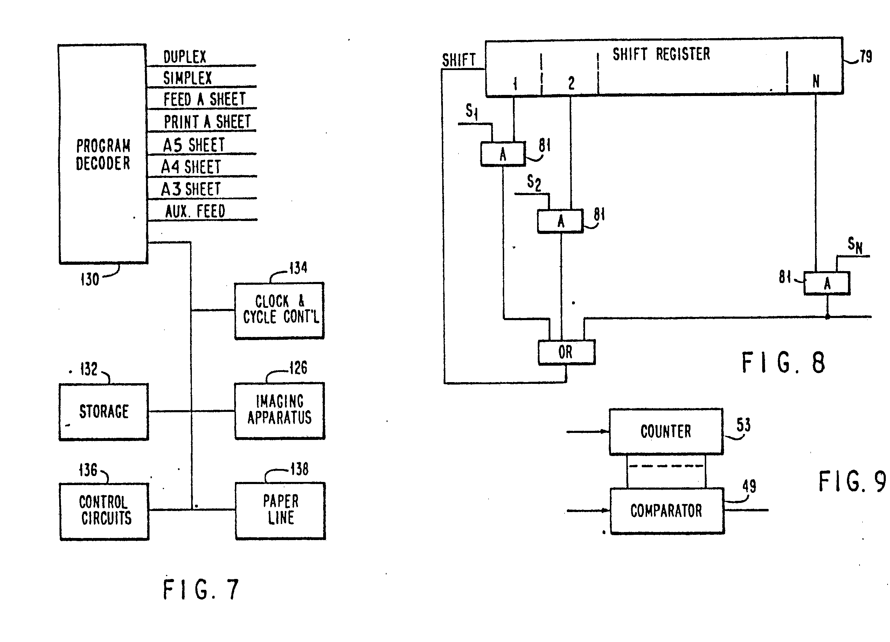

The control system includes a program decoder 130 (Fig. 7), which generates a number of signals to control various machine functions, storage 132, for data to be printed as well as other data, clock and cycle control 134, which provides timing signals to synchronize the various components of the printer, and control circuits 136, which generate control signals to control the printer components based on signals from the program decoder 130, signals from sensors which indicate a sheet is in a predetermined position in paper line 138 and other control signals. The signals generated by control circuits 136 control the operation of imaging apparatus 126 and the movement of sheets through paper line 138. These circuits are not shown in detail since they are standard logic circuits comprising such components as AND's, OR's and LATCHes.

It may be preferred to print sheets passing sideways through the paper line and for this purpose the printing data for the imaging apparatus may be prepared in accordance with the method described and illustrated in the specifications of German Offenlegungsschrift No. 28 25 321, French Publication No. 2,395,840 and United Kingdom Patent Specification No. 1,520,778 all based on United States Patent Application No. 811,911, which was published as United States Patent Specification No. 4,089,029.

The printer is controlled in response to information transmitted along with the print data from the associated data processing system. This information includes the number of pages in the document, whether a cover sheet is to be used, and whether the document is to be printed in a single side (simplex) or duplex printing mode. The control system also has data relative to the sheet size to be used and in response to this information, a table is accessed which provides control data relative to this size. The control data provides scheduling data for front side and duplex print data in the page buffer. This control data also includes timing data relative to the feed of the sheet through the duplex sheet feed path.

To get the printer ready to print a signal FEED A SHEET is generated and this signal actuates feed drum 10 to feed a sheet from stack 14 to paper drum 18 and the drive is stopped when the sheet is in registry with a sensor 11 adjacent paper drum 18. A second FEED A SHEET signal is operable to feed the first sheet to staging drum 40 and on to the input feed with rollers 20 until its leading edge is registered with the gate 22, while a second sheet is fed to a position in registry with sensor 11 adjacent paper drum 18.

When the data for an appropriate number of pages to be printed are in a page buffer in storage 132, printing is commenced. The image to be printed on page one of the first sheet is generated at exposure station 23 and the position of this page is tracked as the electrophotographic drum 24 rotates by counting the pulses from drum emitter 42 which occur at a known rate. When the print image is at a predetermined position relative to the transfer station 27, such as 76.2 mm away, gate 22 is opened by actuating solenoid 21 and feed rolls 26 are actuated to feed the first sheet to the transfer station 27. The predetermined position for start of the sheet feed is chosen so that the image on drum 24 and the sheet reach the transfer station in proper orientation. Transfer corona 28 is gated ON prior to the arrival of the sheet so that the charge placed on the back of the sheet is sufficient to transfer the print image to the sheet. The sheet is separated from the drum 24 with the unfused toner image on the sheet and fed by the post transfer feed 29 towards the fuser station 32.

At the same time, the second sheet is fed by rotation of drum 18 to the drum 40 and into the input feed with rollers 20 so as to register with the gate 22, and a third sheet is fed from the drum 10 to the drum 18 in registry with the sensor 11.

Page one of the second sheet is generated at the exposure station 23 and the second sheet released by the gate 22 at the appropriate time for transfer at the transfer station. This operation is repeated until the first sheet reaches sensor 33 which is located a predetermined distance before duplex drum 34. The predetermined distance, such as 50.8 mm for example, is chosen to permit actuation of the valves controlling vacuum to the duplex drum in time to have vacuum present when the sheet arrives at the duplex drum so that sheets to be duplexed can be diverted to the duplex feed path.

The sheets are tracked through the paper line by placing an indication for each sheet in storage at a first position in the sheet path. As the sheet progresses through predetermined other positions through the sheet feed path the indication is shifted along the storage. A suitable storage comprises a shift register 79 (Fig. 8) having a number of stages equal to the possible positions through the sheet feed path. When the sheet is at the first position in the sheet feed path, an indication is stored in the first stage of the shift register — for example, a one. This indication is then shifted one stage at each of the predetermined positions in response to the sheet presence signal at that position. When the sheet reaches the "decision" position at sensor 33 the appropriate signal from the storage is utilized to enable either the duplex or output feed means.

A number of sensors are provided along the sheet path through the printer to indicate the location of the sheets in the printer. The sensors comprise a photodetector mounted adjacent the sheet path and a light source mounted adjacent the detector. When the leading edge of the sheet comes to the light source and detector, light is reflected from the sheet to the detector so that a signal is generated which signifies to the control means that the sheet has arrived at a known position. The light and photocell could also be mounted so that the sheet coming between them cuts off light from the detector to generate the signal.

In the embodiment shown, there is a shift register 79 for each sheet, which has a number of stages N equal to the number N of sensors along the sheet feed path. The first stage is set with a "one" if the sheet is to be printed on both sides, and a "zero", if not. The output of stage one of shift register 79 is combined in AND circuit 81 with the output S1 of the first sensor. When the sheet reaches the first sensor, the signal conditions AND circuit 81 to energize the SHIFT input of shift register 79 and shift the indication, such as a one, to the second stage. This continues until the sheet reaches the Nth stage, which is chosen to be the "decision" sensor 33. The indication from the Nth AND circuit 81 can be used to actuate the valves to divert the sheet to the duplex path for example, if a one, or to permit the sheet to continue to the output stacker, if a zero.

An alternative control is to have two shift registers similar to register 79 for each sheet. If the sheet is loaded to the input feed from paper drum 18 a one is loaded into the first shift register and this gives an indication to divert the sheet to the duplexing sheet feed path at the decision point. In cases where the sheet is loaded to the input feed from staging drum 40, or in case simplex printing is specified, the second shift register is loaded with a one indication. This shift register output provides an indication to continue the movement of the sheet to the output stacker 36.

The printer is designed to print on a plurality of different standard size sheets within a chosen range. The length of the sheet feed path from the gate through the transfer station, fuser, duplex drum, page flipper, staging drum and input feed back to the gate is chosen to be approximately equal to an integral multiple of each sheet size plus inter-sheet gaps, for the sizes it is desired to print. Sheet sizes may, for example, be A2, A3, A4, A5 and A6. To print such sheets, the length of the paper feed path is chosen at 2450 mm so that five A2 sheets 420 mm wide plus 70 mm gaps, seven A3 sheets 297 mm wide plus 53 mm gaps, nine A4 sheets 210 mm wide plus 52 mm gaps, eleven A5 sheets 148.5 mm wide plus 74 mm gaps, and fifteen A6 sheets 105 mm wide plus 58 mm gaps can be accommodated in the sheet feed path and the data for these numbers of sheets must be scheduled for duplex printing.

The size of the sheet being processed is indicated to the printer along with the data from the data processing system or the data can be entered by the operator. When this paper is loaded the end walls of the input sheet stacks 14, 16 and 47 and of the output stacker 36 are set to the appropriate sheet size. This setting may be sensed to enter the appropriate sheet size signal into the printer system.

Data relating to the timing of each of the sheet sizes to be processed is stored in a table in storage and this data is read out from the table for the sheet size being processed. This data is in the form of counts of pulses from the drum emitter 42 since these pulses are proportional to the movement of sheets through the system. Thus, by counting these pulses, passage of a known sheet length can be determined. The counts stored in the table are keyed to a predetermined starting position for the sheet which in the embodiment shown in sensor 33. Sensor 33 is located in the sheet path at a position in advance of duplex drum 34 so that a decision can be made at that point and have sufficient actuation time for the appropriate valves if duplexing is desired by the time the sheet reaches duplex drum 34.

The size of the duplex drum 34 is chosen so that the periphery is at least twice the longest sheet width and a sheet can be accommodated on the periphery of the drum without overlapping more than three sections. For the specific sheet length examples, a diameter of about 305 mm is appropriate.

The table has an entry LEADING EDGE COUNT for each sheet size which determines the movement of a sheet after the leading edge of the sheet is fed by duplex drum 34 to a predetermined position. In the embodiment shown, the predetermined position is defined by sensor 61 and the position of this sensor is set so that the leading edge of the shortest sheet reaches this sensor before the trailing edge of the sheet reaches section 68.

The leading edge count is loaded into a comparator 49 (Fig. 9) at the beginning of the operation and a binary counter 53 is advanced by pulses from drum emitter 42 after the leading edge of the sheet reaches sensor 61. The contents of the counter 53 are coupled to comparator 49 and when an equal compare is detected, a DETACH SHEET signal is generated. The DETACH SHEET signal is used to operate valves 74 to direct the high pressure $P_1$ to compartments 68 and 70 to remove the sheet from duplex drum 34 and valve 75 to direct low vacuum $V_2$ to the sheet flipper member 38, so that the sheet moves towards the page flipper means 38 which attracts the sheet due to the presence of the low vacuum $V_2$ at the surface of sheet flipper means. The high pressure to compartments 68 and 70 and the low vacuum to sheet flipper means 38 is maintained only for a predetermined relatively short time since the next sheet follows close behind. The sheets are spaced apart along the entire sheet path by gaps that vary somewhat depending on the sheet size being processed, but this gap is in usually between 50 and 75 mm.

High vacuum $V_1$ is substantially simultaneously applied by valve 75 to section 65 of the drum 40 so that the trailing edge of the sheet is attracted to the staging drum 40. Engagement of the sheet on the drum 40 reverses the sheet motion and the former trailing edge becomes the leading edge. The sheet is transported by staging drum 40 to a predetermined position adjacent a sensor 19 whose distance from the gate 22 is the same as the distance of the sensor 11 from the gate 22. The signal generated by detection of the sheet at sensor 33 is transmitted to the control circuits to indicate that a sheet will be in position to receive a printed image on its back surface when it is at the transfer station and printing continues as scheduled. In the event that the sheet is not sensed at sensor 19 or sensor 11 (for a first side printing) the image is not generated since this would produce an image out of synchronism with the paper feed means. This could be due to a slight delay or to some slowdown in the paper feed path such as a paper jam. In the case of a slight delay, the image is generated when the sheet is in position and this would only result in a larger than normal gap between print images on electrophotographic drum 24. The gap that can occur between sheets before an alarm is generated is a matter of design choice.

Thus, when duplex printing on A2 sheets, five sheets are supplied in succession by drum 18 to the feed rollers 20. As the first reaches the sensor 11, the image of page 1 is exposed to the drum 24 at station 23. As the second reaches the sensor 11, the image of page 3 is exposed, and so on with pages 5, 7 and 9.

As the first sheet reaches sensor 33, it is attracted to the drum 34 and after passing sensor 61 is flipped onto drum 40. When the first sheet reaches sensor 19, the fifth sheet will be at the gate 22. The image of page 2 is now exposed to the drum at station 23, and the drum 18 ceases to supply sheets, though a sheet will have reached sensor 11, if more than five sheets are needed.

The first sheet (now printed on one side and flipped over) follows the fifth sheet to the gate 22, and the second sheet (now printed on one side and flipped over) reaches the sensor 19, when the image of page 4 is exposed, and so on with pages 6, 8 and 10.

When the first sheet (now printed on both sides) reaches sensor 33, it is directed to the output feed means 35, which directs it to the stacker 36. As page 2 is uppermost, it passes below the deflector 39 to drop upon the floor of the stack. The second to fifth sheets follow in like manner.

As the fifth sheet reaches the gate 22 and the sixth sheet is adjacent the sensor 11, the image of page 11 is exposed to the drum 24 at station 23 and cycles similar to that described already follow. A continuous stream of sheets is presented to the drum 24 so that the exposure of images to the latter may take place under on-line control from a data processing system. The length of the duplex flipper loop path is such as to allow enough time to flip the sheets, without interrupting the stream of sheets.

In operation, a set of sheets in number no more than will fill the sheet path from the gate to the gate around the flipper (the duplex flipper loop) is supplied in succession and carried around the flipper loop so that the first follows the last. If fewer than the number required to fill the flipper loop are needed, for example at the end of a run, a gap will occur between the last and the first of the set of sheets. After the second printing the sheets are directed to the output.

If the last sheet of all is only to carry one page of printing, it could be sent through the loop and the drum 24 remain unexposed, so that no image was applied. However, it is preferred not to use this method, as the components around the drum 24 are usage sensitive and their use should be limited to the minimum required. Accordingly, as the last sheet arrives at the sensor 33 it is directed to the auxiliary feed 41 by high vacuum $P_1$ applied to the plenum chamber 96 and roller 80 and high vacuum $P_1$ is removed from section 64 of drum 34. The feed 41 is then stopped until the penultimate sheet has passed the sensor 33 again and been stacked by the output feed 35, whereupon the last sheet is released from the auxiliary feed 41, attracted by the output feed 35 and stacked after reversal around the roller 180.

## Claims

1. A printer including means (24, 27, 28) for printing an image on one side of a sheet, first sheet feeding means (10, 12, 18, 20, 26) moving sheets from an input (14, 16) in sequence along a first path to the printing means to receive an image on one side, second sheet feeding means (29, 32, 35) for moving sheets in sequence along a second path from the printing means to an output, and selectively actuable third sheet feeding means (34, 50) for moving selected sheets in a third path from an intermediate point in the second path to an intermediate point in the first path, whence selected sheets are movable in sequence by the first sheet feeding means to the printing means to receive a duplex image on the other side and by the second sheet feeding means to the output, characterised in that the third path and the first and second paths between the intermediate points therein are capable of containing several successive sheets simultaneously, in that the third sheet feeding means is actuable to move selected sheets in succession along the third path from the intermediate point in the second path to the intermediate point in the first path, and in that control means (130, 136, 138) is operable, in response to a request for duplex printing on a set of sheets, to actuate the first sheet feeding means to feed sheets from the input in succession along the first path to the printing means to be printed on one side, to actuate the second sheet feeding means to feed sheets in succession from the printing means to the intermediate point therein, to actuate the third sheet feeding means to feed selected sheets in succession from the intermediate point in the second path to the intermediate point in the first path, to actuate the first sheet feeding means in response to the arrival of a sheet along the third path to cease feeding sheets from the input along the first path to the intermediate point therein and to feed sheets from the third path in succession along the first path from the intermediate point therein to the printing means to be printed on the other side, and to actuate the second sheet feeding means to feed sheets in succession from the printing means along the second path to the output.

2. A printer according to claim 1, in which the first, second and third sheet feeding means include means to attract or repel a sheet by selected vacuum or pressure.

3. A printer according to claim 2, in which each feeding means includes a pneumatic feed drum (18, 30, 34).

4. The printer according to claim 3, in which each pneumatic feed drum has a plurality of sections (64, 66, 68, 70), selectively actuable to attract a sheet.

5. A printer according to any preceding claim, including an auxiliary sheet feed means (41) selectively operable to feed a sheet to the second path.

6. A printer according to claim 5, in which the auxiliary sheet feed means is operable to remove a sheet from the second path and to return it thereto.

7. A printer according to any preceding claim, in which the sheet feeding means are operable to feed different sizes of sheets in response to a sheet size indication signal.

8. A printer according to claim 7, including counting means for counting pulses from a source of pulses proportional to the movement of the sheets by the feeding means, and means for actuating the feeding means in response to counting a predetermined number of pulses derived from the sheet size indication signal.

9. A printer according to claim 7 or 8, in which the sum of the length between the intermediate points in the first and second paths and the length of the third path is such as to contain an integral multiple of each of the sheet sizes.

10. A method of duplex printing in a printer according to any preceding claim, in which sheets, in a set which numbers no more than is containable in the third path and between the intermediate points in the first and second paths, are fed in succession along the first path to the printing means to be printed on one side, in succession along the second path to the intermediate point therein, in succession along the third path to the intermediate point in the first path, in succession along the first path from the intermediate point therein to the printing means to be printed on the other side, and in succession along the second path to the output.

## Patentansprüche

1. Druckeinrichtung mit einer Vorrichtung (24, 27, 28) zum Abdruck eines Bildes auf einer Seite eines Blattes, mit einer ersten Blattzuführvorrichtung (10, 12, 18, 20, 26) zum Transport der Blätter von einer Zufuhr (14, 16) aufeinanderfolgend durch eine erste Bahn zur Druckstation zur Aufnahme eines Bildes auf einer Seite, mit einer zweiten Blattzuführvorrichtung (29, 32, 35) zum Transport der Blätter aufeinanderfolgend von der Druckstation durch eine zweite Bahn zu einem Ausgang und mit einer wahlweise betätigbaren dritten Blattzuführvorrichtung (34, 50) zum Transport ausgewählter Blätter von einer Zwischenposition in der zweiten Bahn durch eine dritte Bahn zu einer Zwischenposition in der ersten Bahn, von wo ausgewählte Blätter aufeinanderfolgend zum Aufbringen eines Duplex-Bildes auf der anderen Blattseite mittels der ersten Blattzuführvorrichtung zur Druckstation und mittels der zweiten Blattzuführvorrichtung zum Ausgang transportiert werden, dadurch gekennzeichnet, daß die dritte Bahn sowie die erste und zweite Bahn zwischen den Zwischenpositionen mehrere aufeinanderfolgende Blätter gleichzeitig enthalten können, daß die dritte Blattzuführvorrichtung zum Transport ausgewählter Blätter aufeinanderfolgend durch die dritte Bahn von der Zwischenposition in der zweiten Bahn zu der Zwischenposition in der ersten Bahn betätigbar ist, und daß eine Steuereinrichtung (130, 136, 138) nach einem Befehl zum Duplex-Druck auf einem Satz Blätter die erste Blattzuführvorrichtung betätigt, zum aufeinanderfolgenden Transport von Blättern von der Zufuhr durch die erste Bahn zur Druckstation zum Bedrucken einer Seite, und die zweite Blattzuführvorrichtung betätigt, zum aufeinanderfolgenden Transport von Blättern von der Druckstation zu der dort befindlichen Zwischenposition, und die dritte Blattzuführvorrichtung betätigt, zum aufeinanderfolgenden Transport von ausgewählten Blättern von der Zwischenposition in der zweiten Bahn zu der Zwischenposition in der ersten Bahn, und nach der Ankunft eines Blattes auf der ersten Bahn die erste Blattzuführvorrichtung betätigt, um den Transport von Blättern von der Zufuhr auf der ersten Bahn zu der dort befindlichen Zwischenposition zu beenden und um Blätter zum Bedrucken auf der anderen Seite von der dritten Bahn aufeinanderfolgend auf der ersten Bahn von der darin befindlichen Zwischenposition zur Druckstation zu befördern, und um zum aufeinanderfolgenden Transport von Blättern von der Druckstation auf der zweiten Bahn zum Ausgang die zweite Blattzuführvorrichtung zu betätigen.

2. Druckeinrichtung nach Anspruch 1, dadurch gekennzeichnet, daß die erste, zweite und dritte Blattzuführvorrichtung Einrichtungen zum wahlweisen Ansaugen oder Abstoßen eines Blattes mittels Unterdruck oder Überdruck aufweisen.

3. Druckeinrichtung nach Anspruch 2, dadurch gekennzeichnet, daß jede Blattzuführvorrichtung eine pneumatische Fördertrommel (18, 30, 34) aufweist.

4. Druckeinrichtung nach Anspruch 3, dadurch gekennzeichnet, daß jede pneumatische Fördertrommel eine Mehrzahl Sektionen (64, 66, 68, 70) zum wahlweisen Ansaugen eines Blattes aufweist.

5. Druckeinrichtung nach den vorherigen Ansprüchen, gekennzeichnet durch eine wahlweise wirksame Hilfsfördervorrichtung (41) zur Zufuhr eines Blattes auf die zweite Bahn.

6. Druckeinrichtung nach Anspruch 5, dadurch gekennzeichnet, daß die Hilfsfördervorrichtung zur Entnahme eines Blattes aus der zweiten Bahn und zur Rückführung desselben in diese Bahn wirksam ist.

7. Druckeinrichtung nach den vorherigen Ansprüchen, dadurch gekennzeichnet, daß die Blattfördervorrichtungen zum Transport von Blättern unterschiedlicher Größe ausgelegt und mittels die Blattgrößen anzeigender Signale gesteuert sind.

8. Druckeinrichtung nach Anspruch 7, gekennzeichnet durch einen Zähler zum Zählen der Impulse, die ein proportional zu der von den Blattzuführvorrichtungen bewirkten Blattbewegung gesteuerter Impulserzeuger abgibt, und eine Betätigungsvorrichtung für die Blattzuführvorrichtungen, die in Abhängigkeit vom Erreichen einer vorbestimmten Zahl von dem Blattgrößenanzeigesignal abgeleiteten Impulsen wirksam wird.

9. Druckeinrichtung nach der Ansprüchen 7 oder 8, dadurch gekennzeichnet, daß die Summe der Länge zwischen den Zwischenpositionen in der ersten und der zweiten Bahn und der Länge der dritten Bahn so gewählt ist, daß sie ein vielfaches Ganzes von jeder der Blattgrößen enthält.

10. Verfahren zum Duplex-Drucken in einer Druckeinrichtung nach einem der vorhergehenden Ansprüche, dadurch gekennzeichnet, daß die Blätter in einer Menge, deren Zahl nicht größer ist als in der dritten Bahn und zwischen den Zwischenpositionen in der ersten und der zweiten Bahn aufgenommen werden können, aufeinanderfolgend durch die erste Bahn zur Druckstation zum Bedrucken einer Seite, durch die zweite Bahn zu der dort befindlichen Zwischenposition, durch die dritte Bahn zu der Zwischenposition in der ersten Bahn, durch die erste Bahn von der dortigen Zwischenposition zur Druckstation zum Bedrucken der anderen Seite und schließlich in der zweiten Bahn zum Ausgang befördert werden.

**Revendications**

1. Imprimante comprenant des moyens (24, 27, 28) pour imprimer une image sur un côté d'une feuille, un premier moyen d'alimentation de feuilles (10, 12, 18, 20, 26) entraînant des feuilles depuis une entrée (14, 16), en séquence, le long d'un premier chemin, vers le moyen d'impression, pour y recevoir une image d'un côté, un deuxième moyen d'alimentation de feuilles (29, 32, 35) pour entraîner des feuilles en séquence, le long d'un deuxième chemin depuis le moyen d'impression, vers une sortie, et un troisième moyen d'alimentation de feuilles (34, 50) pouvant être actionné sélectivement pour entraîner des feuilles sélectionnées sur un troisième chemin depuis un point intermédiaire du deuxième chemin vers un point intermédiaire du premier chemin, d'où il s'en suit que des feuilles sélectionnées peuvent être entraînées en séquence par le premier moyen d'alimentation de feuilles vers le moyen d'impression pour y recevoir une seconde image sur l'autre côté et par le deuxième moyen d'alimentation de feuilles vers la sortie, caractérisée en ce que le troisième chemin et les premier et deuxième chemins entre les points intermédiaires de ceux-ci, sont capables de contenir simultanément plusieurs feuilles successives, en ce que le troisième moyen d'alimentation de feuilles peut être actionné pour entraîner des feuilles sélectionnées à la suite l'une de l'autre le long du troisième chemin depuis le point intermédiaire du deuxième chemin vers le point intermédiaire du premier chemin, et en ce que le moyen de commande (130, 136, 138) peut être actionné, en réponse à une demande d'impression double face sur un jeu de feuilles, pour commander le premier moyen d'alimentation de feuilles et l'alimentation par celui-ci, de feuilles à la suite l'une de l'autre, depuis l'entrée, le long du premier chemin, vers le moyen d'impression pour y être imprimées d'un côté, pour commander le deuxième moyen d'alimentation de feuilles et l'alimentation par celui-ci de feuilles à la suite l'une de l'autre depuis le moyen d'impression vers le point intermédiaire, pour commander le troisième moyen d'alimentation de feuilles et l'alimentation par celui-ci de feuilles sélectionnées à la suite l'une de l'autre depuis le point intermédiaire du deuxième chemin vers le point intermédiaire du premier chemin, pour commander le premier moyen d'alimentation de feuilles en réponse à l'arrivée d'une feuille le long du troisième chemin pour stopper l'alimentation des feuilles depuis l'entrée par le premier chemin vers le point intermédiaire de celui-ci et pour alimenter des feuilles à la suite l'une de l'autre depuis le troisième chemin, le long du premier chemin, depuis le point intermédiaire de celui-ci vers le moyen d'impression pour y être imprimées de l'autre côté, et pour actionner le deuxième moyen d'alimentation de feuilles pour l'alimentation de feuilles à la suite l'une et l'autre depuis le moyen d'impression le long du deuxième chemin, vers la sortie.

2. Imprimante selon la revendication 1 dans laquelle les premier, deuxième et troisième moyens d'alimentation de feuilles comprennent des moyens pour attirer ou repousser une feuille par l'application d'une dépression ou pression sélectionnée.

3. Imprimante selon la revendication 2 dans laquelle chaque moyen d'alimentation comprend un tambour d'alimentation pneumatique (18, 30, 34).

4. Imprimante selon la revendication 3 dans laquelle chaque tambour d'alimentation pneumatique présente une pluralité de sections (64, 66, 68, 70), pouvant être actionnées sélectivement pour attirer une feuille.

5. Imprimante selon l'une quelconque des revendications précédentes, comprenant un moyen d'alimentation de feuilles auxiliaire (41) pouvant fonctionner sélectivement pour alimenter une feuille vers le deuxième chemin.

6. Imprimante selon la revendication 5 dans laquelle le moyen d'alimentation de feuilles auxiliaire peut fonctionner pour retirer une feuille de deuxième chemin et l'y ramener.

7. Imprimante selon l'une quelconque des revendications précédentes, dans laquelle les moyens d'alimentation de feuilles peuvent fonctionner pour alimenter des feuilles de différentes dimensions en réponse à un signal d'indication de dimensions de feuilles.

8. Imprimante selon la revendication 7, comprenant un moyen de comptage pour compter des impulsions issues d'une source d'impulsions proportionnelles au mouvement des feuilles commandées par les moyens d'alimentation, et un moyen pour actionner les moyens d'alimentation en réponse au comptage d'un nombre prédéterminé d'impulsions dérivées du signal d'indication de dimensions de feuille.

9. Imprimante selon la revendication 7 ou 8, dans laquelle la somme de la distance entre les points intermédiaires des premier et deuxième chemins et de la longueur du troisième chemin, est telle qu'elle contient un multiple entier de chacune des dimensions des feuilles pouvant être utilisées.

10. Procédé d'impression double dans une imprimante selon l'une quelconque des revendications précédentes, dans lequel des feuilles, en un jeu qui n'excède pas ce qui peut être contenu par le troisième chemin et entre les points intermédiaires des premier et deuxième chemins, sont alimentées à la suite l'une de l'autre le long du premier chemin vers le moyen d'impression pour y être imprimées d'un côté, à la suite l'une de l'autre le long du deuxième chemin vers son point intermédiaire, à la suite l'une de l'autre le long du troisième chemin vers le point intermédiaire du premier chemin, à la suite l'une de l'autre le long du premier chemin depuis son point intermédiaire vers le moyen d'impression pour y être imprimées de l'autre côté, et à la suite l'une de l'autre vers la sortie.

# 0014752

FIG.5

FIG. 1

1

0014752

FIG. 2

EXP. STATION 23

DEV. STATION 25

2

**0014752**

FIG. 3

FIG. 4

FIG. 6

PROGRAM DECODER 130

- DUPLEX
- SIMPLEX
- FEED A SHEET
- PRINT A SHEET
- A5 SHEET
- A4 SHEET
- A3 SHEET
- AUX. FEED

CLOCK & CYCLE CONT'L 134

STORAGE 132

IMAGING APPARATUS 126

CONTROL CIRCUITS 136

PAPER LINE 138

FIG. 7

SHIFT REGISTER 79

1    2    N

S₁    A 81

S₂    A 81

Sₙ

81 A

OR

FIG. 8

COUNTER 53

COMPARATOR 49

FIG. 9

0014752